# EUROPÄISCHE PATENTSCHRIFT

(11) **EP 1 785 395 B1**
(45) Veröffentlichungstag und Bekanntmachung des Hinweises auf die Patenterteilung: **19.08.2009**
(21) Anmeldenummer: 05024753.5
(22) Anmeldetag: 12.11.2005
(51) Int. Cl.: C01B 13/14, C09C 3/06, C09C 1/30, C23C 18/08, C23C 18/12, C09C 1/00

(54) **Verfahren zur Herstellung dotierter Metalloxidpartikel**
Process for the preparation of doped metal oxide particles
Procédé de préparation de particules d'oxyde métallique dopé

(43) Veröffentlichungstag der Anmeldung: 16.05.2007
(73) Patentinhaber: Evonik Degussa GmbH, 45128 Essen (DE)
(72) Erfinder: Schumacher, Kai Dr., 65719 Hofheim (DE); Golchert, Rainer, 64807 Dieburg (DE); Roth, Helmut, 63814 Mainaschaff (DE); Alff, Harald, 63796 Kahl am Main (DE)

(56) Entgegenhaltungen:
- EP-A- 0 769 534
- WO-A-96/36441
- WO-A-20/04056927
- US-A- 5 728 205
- US-A1- 2003 051 635

## Beschreibung

Die Erfindung betrifft ein Verfahren zur Herstellung dotierter Metalloxidpartikel, die dotierten Metalloxidpartikel selbst, sowie deren Verwendung.

Die gängige Methode der Dotierung einer Oberfläche durch Imprägnierung mit einer den Dotierstoff enthaltenden Lösung, ist speziell zur Dotierung von pyrogen hergestellten Metalloxiden in der Regel ungeeignet. Pyrogen hergestellte Metalloxide ändern in der Regel ihre Eigenschaften bei Kontakt mit einem flüssigen Medium. So kann es beispielsweise ein Metalloxidpulver deutlich gröber werden und die rheologischen Eigenschaften können sich ändern.

In EP-A-850876 wird ein Verfahren zur Herstellung dotierter Metalloxide offenbart. Dabei wird ein den Dotierstoff enthaltendes Aerosol in eine Flamme, wie sie von der Herstellung pyrogener Metalloxide mittels Flammenhydrolyse oder Flammenoxidation bekannt ist, eindosiert. Die dotierten Metalloxide zeichnen sich dadurch aus, dass die Dotierkomponente feinverteilt und homogen in dem Metalloxid vorliegt. Diese Verteilung der Dotierkomponente ist für viele Anwendungen gewünscht. Andererseits gibt es insbesondere katalytische Anwendungen, bei denen die Dotierkomponente sich vorzugsweise auf der Oberfläche befinden sollte. Solche dotierten Metalloxide sind gemäß EP-A-850876 nicht herstellbar.

In WO96/36441 wird ein Verfahren zur Herstellung umhüllter Titandioxidpartikel offenbart, bei dem man in einen Reaktor unterhalb einer Zone, in der durch Reaktion von Titantetrachlorid mit Sauerstoff Titandioxidpartikel entstehen, thermisch zersetzbare, flüchtige Metallverbindungen eindüst. Dabei ist an der Eindüsungsstelle die Temperatur immer noch so hoch, dass die Metallverbindungen in die Gasphase übergehen und auf der Oberfläche der Titandioxidpartikel in die entsprechenden Oxide überführt werden oder zunächst oxidiert werden und sich dann auf der Oberfläche der Titandioxidpartikel abscheiden. Nachteilig bei diesem Verfahren ist die notwendige Einschränkung auf flüchtige Metallverbindungen.

Es bestand somit die Aufgabe ein Verfahren bereitzustellen, welches die Herstellung von ausschließlich auf der Oberfläche dotierten Metalloxiden zu ermöglichen, ohne die Nachteile des Standes der Technik aufzuweisen.

### Definitionen

Im Rahmen der vorliegenden Erfindung gelten nachfolgende Definitionen:

Unter dotierten Metalloxidpartikeln sind Metalloxidpartikel oder Metalloidoxidpartikel zu verstehen, welche auf der Oberfläche eine oder mehrere Dotierkomponenten tragen. Dabei bildet die Dotierkomponente auf der Oberfläche Domänen, deren Durchmesser als untere Grenze einige Moleküle der Dotierkomponente umfasst. Unter Domänen sind räumlich voneinander getrennte Bereiche der Dotierkomponenten zu verstehen. Die obere Grenze des Durchmessers der Dotierkomponente ist durch die BET-Oberfläche und der Zugänglichkeit der Oberfläche der undotierten Metalloxidpartikel abhängig. Je größer der Durchmesser eines undotierten Metalloxidpartikels, desto größer ist dessen Oberfläche. Damit kann auch der Durchmesser der Dotierkomponente größer sein, als bei einem Metalloxidpartikel mit kleinerem Durchmesser.

Die Durchmesser der Domänen sind in der Regel verschieden groß. Dies ist darauf zurückzuführen, dass bei der Verdüsung der Metallverbindung bereits unterschiedliche Tröpfchengrößen vorliegen. Weiterhin können mehrere kleinere Domänen zu einer größeren zusammenwachsen. Bei Einsatz von aggregierten Metalloxidpartikeln, ist es auch möglich, dass einzelne Primärpartikel des Aggregates keine Dotierung aufweisen.

Metalloxidpartikel und Dotierkomponente können die gleiche Metallkomponente aufweisen, sich aber in ihren kristallographischen Eigenschaften unterscheiden. Beispielsweise können die Metalloxidpartikel kristallin und die Dotierkomponente amorph vorliegen. Die Metalloxidpartikel und Domänen können auch in verschiedenen Kristallmodifikationen vorliegen.

Unter Dotierstoff ist der Stoff zu verstehen, der eingesetzt wird um den die Dotierkomponente enthaltenden Metalloxidpartikel zu erhalten. Während der Dotierstoff eine oxidierbare und/oder hydrolysierbare Metallverbindung ist, ist die Dotierkomponente in der Regel ein Oxid eines Metalles. Der Dotierstoff kann in flüssiger, gelöster oder suspendierter Form vorliegen. Er kann, falls flüssig direkt eingesetzt werden oder aber in einem oder mehreren Lösungsmitteln gelöst vorliegen. Feste Dotierstoffe werden in einem oder mehreren Lösungsmitteln gelöster Form oder als Suspension eingesetzt.

Metalloxidpartikel umfassen Partikel von Metalloxiden oder Metallmischoxiden, die in Form aggregierter Primärpartikel, weitestgehend aggregierter Primärpartikel oder nicht aggregierter Partikel vorliegen. Der Durchmesser der Partikel reicht dabei von einigen µm, in der Regel 1 bis 10 µm bis zu einigen Nanometern, in der Regel 5 bis 100 nm. Der Begriff Metalloxid umfasst neben den eigentlichen Metalloxiden auch Metalloidoxide, wie beispielsweise Siliciumdioxid und Mischoxide.

Unter dem Ausdruck "oxidierbare und/oder hydrolysierbare Metallverbindung" ist zu verstehen, dass die Verbindung durch Oxidation und/oder Hydrolyse in das Oxid überführt werden kann. Abhängig von den Reaktionsbedingungen, nämlich der zur Verfügung stehende Wasserdampf und/oder Sauerstoff, können die verschiedenen Oxide oder ein Gemisch von Oxiden gebildet werden, beispielsweise Fe₂O₃ und/oder Fe₃O₄.

Ausnahmen hiervon sind Edelmetallverbindungen, die ganz oder überwiegend in elementares Edelmetall umgewandelt werden und als solches auf dem Metalloxidpartikel vorliegen.

Unter dem Ausdruck "Reaktionszone" ist ein von der äußeren Atmosphäre abgegrenzter Raum zu verstehen. Dies kann beispielsweise ein Strömungsrohr oder ein Behälter sein.

Die BET-Oberfläche ist die nach DIN66131 bestimmte spezifische Oberfläche der dotierten Metalloxidpartikel.

Unter pyrogen sind durch Flammenoxidation und/oder Flammenhydrolyse erhaltene Metalloxidpartikel zu verstehen. Die so erhaltenen Metalloxidpartikel sind weitestgehend porenfrei und weisen auf der Oberfläche freie Hydroxylgruppen auf. Als Ausgangsstoffe für pyrogene Verfahren können organische und anorganische Stoffe eingesetzt werden. Besonders geeignet sind beispielsweise die Metallchloride wie Siliciumtetrachlorid, Aluminiumchlorid, Titantetrachlorid, Zirkontetrachlorid. Geeignete organische Ausgangsverbindungen können beispielsweise Si(OR)₄ mit R=CH₃ oder CH₂CH₃ sein. Die Auswahl der Verbindungen ist dem Fachmann auf dem Gebiet pyrogener Oxide bekannt.

Unter nasschemischen Verfahren sind sowohl Fällungsverfahren wie auch Sol-Gel-Verfahren zu verstehen. Siehe hierzu zum Beispiel C.J. Brinker und G.W. Scherer, Sol-Gel Science, Acad. Press, San Diego, 1990.

Gegenstand der Erfindung ist ein Verfahren zur Herstellung von dotierten Metalloxidpartikeln, bei denen sich die Dotierkomponente in Form von Domänen auf der Oberfläche befindet, bei dem man
- in einer ersten Reaktionszone als Dotierstoff eine oxidierbare und/oder hydrolysierbare Metallverbindung zusammen mit einem Zerstäubungsgas in einen Strom von Metalloxidpartikeln in einem Transportgas zerstäubt,
   - wobei der Massenstrom der Metalloxidpartikel und der Massenstrom des Dotierstoffes so gewählt sind, dass die dotierten Metalloxidpartikel 10 ppm bis 10 Gew.-%, bevorzugt 100 ppm bis 3 Gew.-%, der Dotierkomponente enthalten, wobei die zuzuführende Menge an Dotierstoff als entsprechendes Oxid berechnet wird, und
   - wobei die Temperatur in der ersten Reaktionszone so gewählt ist, dass sie unterhalb der Siedetemperatur des Dotierstoffes bei den herrschenden Reaktionsbedingungen ist, und
- in einer zweiten Reaktionszone man anschließend den Strom aus der ersten Reaktionszone und
   - gegebenenfalls wenigstens soviel Sauerstoff und/oder Wasserdampf zusammenführt, dass die Menge an Sauerstoff und/oder Wasserdampf wenigstens ausreicht um den Dotierstoff vollständig umzusetzen,
   - wobei die Temperatur von 300 bis 2000°C, bevorzugt 500 bis 1000°C, beträgt und
- man nachfolgend das Reaktionsgemisch abkühlt oder abkühlen lässt und die dotierten Metalloxidpartikel von den gasförmigen Stoffen abtrennt.

Bevorzugt können als Metalloxidpartikel die Oxide von Aluminium, Bor, Cer, Germanium, Niob, Silicium, Tantal, Titan, Vanadium, Wolfram, Zink, Zirkon und/oder deren Mischoxide eingesetzt werden.

Besonders bevorzugt können die Oxide von Aluminium, Cer, Silicium, Titan, Zink, Zirkon und/oder deren Mischoxide als Metalloxidpartikel eingesetzt werden.

Insbesondere können Metalloxidpartikel pyrogener Herkunft, wie beispielsweise die Oxide von Aluminium, Bor, Cer, Germanium, Niob, Silicium, Tantal, Titan, Vanadium, Wolfram, Zink, Zirkon und/oder deren Mischoxide eingesetzt werden eingesetzt werden.

Die in Form von Metallverbindungen eingesetzten Dotierstoffe können sowohl organischer wie auch anorganischer Natur sein. Deren Auswahl ist nur dahin gehend beschränkt, dass sie unter den Reaktionsbedingungen oxidierbar und/oder hydrolysierbar sind und dass deren Siedepunkt unterhalb der Temperatur in den Reaktionszonen 1 und 2 ist.

Geeignete organische Dotierstoffe können beispielsweise aus der Gruppe der Carboxylate, Acetylacetonate, Alkoxide, Metallocene ausgewählt werden.

Geeignete anorganische Dotierstoffe umfassen insbesondere Chloride, Nitrate und/oder Sulfate.

Die Metallkomponente der Dotierstoffe ist nicht limitiert. Insbesondere kann die Metallkomponente die Li, Na, K, Rb, Cs; Be, Mg, Ca, Sr, Ba; B, Al, Ga, In, Tl; Si, Ge, Sn, Pb; P, As, Sb, Bi; Cu, Ag, Au; Zn, Cd; Sc, Y, La; Ti, Zr, Hf; V, Nb, Ta; Cr, Mo, W; Mn, Tc, Re; Fe, Co, Ni, Ru, Rh, Pd, Os, Ir, Pt; La, Ce, Pr, Nd, Pm, Sm, Eu, Gd, Tb, Dy, Ho, Er, Tm, Yb, Lu sein.

Besonders bevorzugt wird die Metallkomponente ausgewählt aus den Elementen umfassend K, Al, Si, P, Cu, Ag, Zn, Y, La, Ti, V, Mn, Fe, Co, Ru, Pt, Ce, Er, Yb.

Besonders bevorzugte Dotierstoffe sind Aluminiumacetylacetonat, Aluminiumtrichlorid, Aluminium-iso-sek.-butylat, Eisennitrat, Eisensulfat, Eisentrichlorid, Kaliumchlorid, Kalium-tert-butylat, Mangancarbonat, Mangandichlorid, Mangandinitrat, Mangansulfat, Siliciumtetrachlorid, Titantetrachlorid, Zirkonacetylacetonat, Zirkontetrachlorid.

Gemäß der Erfindung kann der Dotierstoff in flüssiger, gelöster oder suspendierter Form eingebracht werden. Vorzugsweise wird der Dotierstoff in einem oder mehreren geeigneten Lösungsmitteln gelöst. Bevorzugtes Lösungsmittel ist Wasser, alleine oder in einer Mischung mit einem organischen Lösungsmittel umfassend Methanol, Ethanol, n-Propanol, iso-Propanol, n-Butanol, iso-sek-Butanol, tert-Butanol, Ameisensäure, Essigsäure, Propionsäure, Buttersäure, Pentansäure, Hexansäure, Octansäure, 2-Ethylhexansäure und/oder Benzin. In der Regel beträgt der Anteil an organischem Lösungsmittel in dem Gemisch Wasser/organisches Lösungsmittel nicht mehr als 50 Gew.-%. Der Siedepunkt des Lösungsmittels ist niedriger als der Siedpunkt des Dotierstoffes und niedriger als die Umwandlungstemperatur des Dotierstoffes in die Dotierkomponente.

Die Konzentration des Dotierstoffes in der Lösung richtet sich nach dessen Löslichkeit und der Konzentration mit der die Metallverbindung noch verdüst werden kann. Dabei sind Temperatur, pH-Wert, Art des Lösungsmittels und Druck zu berücksichtigen. Soll der Anteil der Dotierkomponente auf dem späteren dotierten Metalloxidpartikel sehr gering sein, beispielsweise 10 bis 100 ppm, kann es vorteilhaft sein, eine möglichst niedrig konzentrierte Lösung einzusetzen. In der Regel beträgt die Konzentration des Dotierstoffes 0,01 bis 20 Gew.-%, wobei ein Bereich von 0,1 bis 5 Gew.-% bevorzugt sein kann.

Die den Dotierstoff enthaltende Lösung kann jeglichen pH-Wert aufweisen beziehungsweise kann mit geeigneten pH-Wert-Regulatoren auf einen solchen eingestellt werden. Geeignete pH-Wert-Regulatoren sind solche, die bei den Reaktionsbedingungen des erfindungsgemäßen Verfahrens nicht zu einer dauerhaften Verunreinigung des Produktes führen. Beispielsweise wird bei Einsatz von Salzsäure zur pH-Wert-Regulierung, diese durch Sauerstoff und/oder Wasserdampf weitestgehend aus dem Produkt entfernt. Gegebenenfalls müssen weitere dieser Reinigungsschritte nachgeschaltet werden.

Die Zerstäubung kann durch dem Fachmann bekannte Aerosol-Generatoren, Ein- oder Mehrstoffdüsen, oder Ultraschallvernebelung erfolgen. Geeignet sind insbesondere Vorrichtungen, die ein Aerosol mit einem mittleren Tröpfchendurchmesser von weniger als 100 µm, insbesondere 10 bis 50 µm erzeugen.

Gemäß der Erfindung kann das Transportgas Sauerstoff, Wasserdampf, Inertgase, Kohlendioxid, Kohlenmonoxid, Chlor, Salpetersäure, Salzsäure, Edelgase oder ein Gemisch der vorgenannten Verbindungen sein.

Die Temperatur in der ersten Reaktionszone ist so gewählt, dass sie unterhalb der Siedetemperatur des Dotierstoffes bei den herrschenden Reaktionsbedingungen ist. Im Falle, dass in der ersten Reaktionszone Sauerstoff und/oder Wasserdampf vorliegt, ist darauf zu achten, dass die Temperatur in der ersten Reaktionszone unterhalb der Umwandlungstemperatur des Dotierstoffes in das entsprechende Oxid ist.

Das erfindungsgemäße Verfahren kann bevorzugt so ausgeführt werden, dass die mittlere Verweilzeit in der ersten Reaktionszone 1 ms bis 1 min beträgt.

Weiterhin kann das erfindungsgemäße verfahren bevorzugt so ausgeführt werden, dass die mittlere Verweilzeit in der zweiten Reaktionszone 1 s bis 5 min beträgt.

Das erfindungsgemäße Verfahren kann bevorzugt so ausgeführt werden, dass man den Dotierstoff in einen Strom einbringt, wie er bei der Herstellung von pyrogen Oxiden mittels Flammenhydrolyse oder Flammenoxidation anfällt, welcher neben Metalloxidpulver noch Sauerstoff und/oder Wasserdampf enthält.

Wie bereits weiter vorne beschrieben, umfassen pyrogene Oxide solche, die durch Flammenoxidation und/oder Flammenhydrolyse erhalten werden. Gewöhnlich wird dabei so vorgegangen, dass eine Metallverbindung, beispielsweise Aluminiumchlorid, in Gegenwart von Sauerstoff und/oder Wasserdampf in einer Flamme zu den entsprechenden Metalloxidpartikeln umgesetzt wird. Die Flamme wird in der Regel durch Reaktion eines Brenngases, wie Wasserstoff oder Methan, mit Sauerstoff aus der Luft erhalten. Sauerstoff kann dabei im Überschuss eingesetzt werden. In dem Strom, ausgehend von Aluminiumchlorid, liegen demnach wenigstens die Aluminiumoxidpartikel, Wasserdampf und Salzsäure oder Chlor vor. Wird Sauerstoff im Überschuss eingesetzt, enthält der Strom weiterhin Sauerstoff. Gegebenenfalls kann er noch Stickstoff und/oder Kohlendioxid enthalten. Die Reaktion von Aluminiumchlorid zu Aluminiumoxid soll beispielhaft ein pyrogenes Verfahren verdeutlichen. Selbstverständlich können auch andere Metallverbindungen eingesetzt werden, die zu anderen Strömen führen, deren Zusammensetzung dem Fachmann bekannt ist.

In diesen Strom wird dann der Dotierstoff zerstäubt, wobei die Temperatur des Stromes unterhalb der Siedetemperatur des Dotierstoffes ist, und unterhalb der Reaktionstemperatur der Umwandlung des Dotierstoffes in das entsprechende Oxid ist. Die Temperatur des Stromes kann gegebenenfalls durch Kühlen so eingestellt werden, dass diese Bedingungen erfüllt sind. Gewöhnlich liegt die Temperatur in diesem Bereich bei 200 bis 700°C.

Nachfolgend wird durch interne oder externe Beheizung eine Temperatur von 300 bis 2000°C, bevorzugt 500 bis 1000°C, erzeugt.

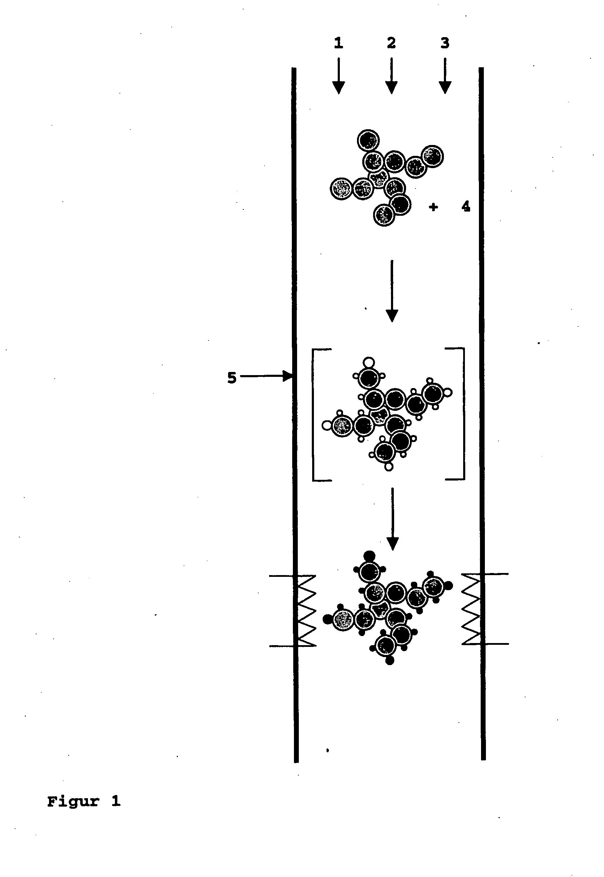

Ein möglicher Reaktionsmechanismus für die Dotierung der Metalloxidpartikel sieht vor, dass die Metalloxidpartikel zunächst mit dem Dotierstoff unter Bildung von Domänen belegt werden und anschließend in Gegenwart von Sauerstoff und/oder Wasserdampf der Dotierstoff auf dem Metalloxidpartikel in das entsprechende Oxid beziehungsweise für den Fall, dass der Dotierstoff eine Edelmetallverbindung ist, in das Edelmetall, umgewandelt wird. Figur 1 zeigt schematisch und beispielhaft die Herstellung von aggregierten, mit Eisenoxid dotierten Siliciumdioxidpartikeln gemäß diesem Prozess. Siliciumtetrachlorid (1) wird in einer Flamme, gebildet durch Reaktion von Luft (2) mit Wasserstoff (3) unter Bildung von aggregierten Siliciumdioxidpartikeln und einem Gasgemisch (4) bestehend aus Wasserdampf, gegebenenfalls Rest-Sauerstoff, Stickstoff und Salzsäure umgesetzt. Die Reaktionsprodukte werden nachfolgend abgekühlt und Eisenchlorid als Dotierstoff zugeführt, zunächst unter Bildung von mit dem Dotierstoff (als o gekennzeichnet) belegten Siliciumdioxidpartikeln. Durch anschließende Erhöhung der Temperatur wandelt sich der Dotierstoff Eisenchlorid in die Dotierkomponente Eisenoxid (Fe₂O₃) (als ● gekennzeichnet) unter Bildung der mit Eisenoxid dotierten Siliciumdioxidpartikel. Unter den Reaktionsbedingungen wird an den dotierten Metalloxidpartikeln anhaftende Salzsäure weitestgehend entfernt.

Ein weiterer Gegenstand der Erfindung sind nach dem erfindungsgemäßen Verfahren erhältliche, dotierte Metalloxidpartikel, bei denen sich die Dotierkomponente ausschließlich auf der Oberfläche befindet und der Anteil an der Dotierkomponente von 10 ppm bis 10 Gew.-%, vorzugsweise 100 ppm bis 3 Gew.-%, bezogen auf die dotierten Metalloxidpartikel, beträgt.

Die dotierten Metalloxidpartikel können eine BET-Oberfläche von bevorzugt 1 bis 500 m²/g und besonders bevorzugt eine von 20 bis 400 m²/g aufweisen.

Ein weiterer Gegenstand der Erfindung ist die Verwendung der dotierten Metalloxidpartikel als Katalysator, Katalysatorträger, als Füllstoff und zum Polieren.

Das erfindungsgemäße Verfahren erlaubt die Herstellung von dotierten Metalloxidpartikeln, wobei die Metalloxidpartikel und die Dotierstoffe nahezu unbeschränkt kombinierbar sind.

Die mittels des erfindungsgemäßen Verfahrens erhältlichen dotierten Metalloxidpartikel zeichnen sich dadurch aus, dass sich die Dotierungskomponente ausschließlich auf der Oberfläche der Metalloxidpartikel befindet. Weiterhin ändert sich die Morphologie der eingesetzten Metalloxidpartikel nicht oder nur unwesentlich. Unter Morphologie ist beispielsweise die Struktur von nicht dotierten, aggregierten Metalloxidpartikeln zu verstehen. Wie in Figur 1 schematisch gezeigt, ändert sich diese während des Dotierungsprozesses nicht. Dagegen führen Verfahren, bei denen die Dotierungskomponente in einem wässerigen Prozess auf Metalloxidpartikel aufgebracht wird, zu Veränderungen in der Morphologie der Metalloxidpartikel.

### Beispiele

Beispiel 1: 1200 g/h einer 1 gewichtsprozentigen Lösung von Manganacetylacetonat (C₁₀H₁₄MnO₄) in 90:10 Vol-% Wasser/Ethanol werden in einen Strom von 2 kg/h AEROSIL^{®}200 in 15 Nm³/h Stickstoff bei einer Temperatur T_{RZ1} von 240 °C zerstäubt. Nach einer mittleren Verweilzeit t_{RZ1} von 25 ms wird die Temperatur des Gemisches auf T_{RZ2} = 700 °C erhöht. Nach einer mittleren Verweilzeit t_{RZ2} = 2 min werden die dotierten Metalloxidpartikel in einem nachgeschalteten Filter abgeschieden.

Die erfindungsgemäßen Beispiele 2 bis 4 werden analog Beispiel 1 durchgeführt. In Beispiel 2 wird AEROSIL^{®}OX50, in Beispiel 3 Sipernat^{®}160 und in Beispiel 4 ein Silicium-Titanmischoxid (Si-Ti-MOX) eingesetzt. Das Silicium-Titan-Mischoxid wird erhalten gemäß der Offenlegungsschrift DE 102004024500 mit dem Anmeldetag 18.05.2004: Siliciumtetrachlorid (3,60 kg/h) und Titantetrachlorid (3,00 kg/h) werden gemeinsam in einem Verdampfer bei 160 °C verdampft. Die Dämpfe werden mittels Stickstoff in eine Mischkammer überführt. Getrennt hiervon werden Wasserstoff (3,30 Nm³/h) und Primärluft (13,30 Nm³/h) in die Mischkammer eingebracht. In einem Zentralrohr wird das Reaktionsgemisch einem Brenner zugeführt und gezündet. Dabei brennt die Flamme in ein wassergekühltes Flammrohr. Zusätzlich werden getrennt voneinander Sekundärluft (20 Nm³/h) und Wasserstoff (0,2 Nm³/h) und Kohlendioxid (0,2 Nm³/h) in den Reaktionsraum eingebracht. Das Silicium-Titan-Mischoxid wird in einem nachgeschalteten Filter abgeschieden und anschließend im Gegenstrom mit Wasserdampf behandelt.

Die Eigenschaften der eingesetzten Partikel sind in Tabelle 1 wiedergegeben. Alle Einsatzstoffe und Reaktionsbedingungen sind in Tabelle 2 wiedergegeben. Die analytischen Daten der dotierten Metalloxidpartikel finden sich in Tabelle 3.

Beispiel 5: 8,00 kg/h Siliciumtetrachlorid werden verdampft. Die Dämpfe werden mittels 3,3 Nm³/h Luft als Traggas in eine Mischkammer überführt. Getrennt hiervon werden 3,6 Nm³/h Kern-Wasserstoff und 10,0 Nm³/h Primärluft in die Mischkammer eingebracht. In einem Zentralrohr wird das Reaktionsgemisch einem Brenner zugeführt und gezündet.

Dabei brennt die Flamme in ein wassergekühltes Flammrohr. Zusätzlich werden in den Reaktionsraum 20 Nm³/h Sekundärluft eingebracht. Bei einer Temperatur T_{RZ1} von 400°C werden in diesen Strom aus Siliciumdioxidpartikeln, Salzsäure, Luft und Stickstoff 210 g/h einer 1,8 Gew.-% Lösung von Eisen-II-Chlorid in Wasser eingedüst. Nach einer mittleren Verweilzeit t_{RZ1} von 12 ms wird die Temperatur des Gemisches auf T_{RZ2} = 690°C erhöht. Nach einer mittleren Verweilzeit t_{RZ2} = 45 s werden die dotierten Metalloxidpartikel in einem nachgeschalteten Filter abgeschieden.

Die erfindungsgemäßen Beispiele 6 bis 10 werden analog Beispiel 5 durchgeführt. In Beispiel 9 wird Aluminiumchlorid anstelle von Siliciumtetrachlorid verdampft. In Beispiel 10 wird Titantetrachlorid anstelle von Siliciumtetrachlorid verdampft. Alle Einsatzstoffe und Reaktionsbedingungen sind in Tabelle 4 wiedergegeben.

Die analytischen Daten der dotierten Metalloxidpartikel sind in Tabelle 5 wiedergegeben.

**Tabelle 1: Physikalisch-chemische Daten der eingesetzten Pulver**

| | | **sipernat^{®} 160** | **Aerosil^{®} OX 50** | **Aerosil^{®} 200** | **Si-Ti-MOX** |
|---|---|---|---|---|---|
| Spezifische Oberfläche (BET) | m²/g | 165 | 50 ± 15 | 200 ± 25 | 100 |
| Mittlere Größe der Primärteilchen | nm | 7 | 40 | 12 | n.b. |
| Trocknungsverlust*) | Gew.-% | 3 | < 1,5 | < 1,5 | n.b. |
| Glühverlust **.) | Gew.-% | 3 | < 1,0 | < 1,0 | n.b. |
| pH-Wert | | 5, 5^{§}) | 3,8-4,8^{&)} | 3,7-4,7^{&}) | 3,75^{&}) |
| SiO₂-Gehalt***) | Gew.-% | 99,4 | > 99,8 | > 99,8 | 49,9 |
| TiO₂-Gehalt***) | Gew.-% | - | - | - | 51,1 |

| | | | | | |
|---|---|---|---|---|---|
| *) 2 h bei 105 °C; **)2 h bei 1000 °C; ***) bezogen auf geglühte Substanz; §) 5 prozentige Dispersion in Wasser; &) 4 prozentige Dispersion in Wasser; | | | | | |

**Tabelle 2: Einsatzstoffe und Reaktionsbedingungen - I**

| | **Transportgas** | | **Metalloxid** | | **Dotierstoff** | | | | **Verweilzeit** | | **Temperatur** | |
|---|---|---|---|---|---|---|---|---|---|---|---|---|
| **Beisp.** | **Art** | **Menge** | **Art** | **Menge** | **Art** | **Lösemittel** | **Konz.** | **Menge** | t_{RZ1&)} | t_{RZ2} | T_{RZ1}, | T_{RZ2} |
| | | Nm³/h | | kg/h | | | Gew.-% | g/h | ms | min | °C | °C |
| **1** | Luft | 15 | AEROSIL®200 | 2 | C₁₀H₁₄MnO₄ | #) | 1 | 1200 | 25 | 2 | 240 | 700 |
| **2** | Luft | 25 | AEROSIL^{®}OX50 | 1,4 | CuCl₂ | H₂O | 7,5 | 8.50 | 40 | 4 | 430 | 650 |
| **3** | Luft | 15 | Si-Ti-MOX | 2 | FeCl₃ | H₂O | 0,2 | 100 | 30 | 4 | 480 | 680 |
| **4** | N₂ | 30 | Sipernat^{®}160 | 1,4 | Ce(NO₃)₃ | H₂O | 10. | 2500 | 45 | 4,5 | 410 | 720 |

| | | | | | | | | | | | | |
|---|---|---|---|---|---|---|---|---|---|---|---|---|
| #) 90:10 Vol-% H₂O/EtOH; &) RZ = Reaktionszone | | | | | | | | | | | | |

**Tabelle 3: Dotierte Metalloxidpartikel - I**

| | | **Metalloxid** | | **Dotierkomponente** | |
|---|---|---|---|---|---|
| **Beisp.** | **BET** | **Art** | **Anteil** | **Art** | **Anteil** |
| | m²/g | | Ges.-% | | Gew.-% |
| 1 | 194 | SiO₂ | 99,8 | MnO₂ | 0,2 |
| 2 | 44 | SiO₂ | 97,2 | CuO | 2,6 |
| 3 | 101 | SiO₂/TiO₂ | 99, 9 | Fe₂O₃ | 0,0045 |
| 4 | 162 | SiO₂ | 90,2 | CeO₂ | 9,3 |

**Tabelle 4: Einsatzstoffe und Reaktionsbedingungen - II**

| | **Wasserstoff** | | **Luft** | | **Metalloxid-precursor** | | **Dotierstoff^{§})** | | | **Verweilzeit** | | **Temperatur** | |
|---|---|---|---|---|---|---|---|---|---|---|---|---|---|
| **Beisp.** | Kern | Mantel | Primär | Sek. | Art | Menge | Art | Konz. | Menge | t_{RZ1&)} | t_{RZ2} | T_{RZ1} | T_{RZ2} |
| | Nm³/h | Nm³/h | Nm³/h | Nm³/h | | kg/h | | Gew-% | g/h | ms | s | °C | °C |
| **5** | 3,6 | 0,50 | 8,1 | 20 | SiCl₄ | 8,00 | FeCl₃ | 1,8 | 210 | 12 | 45 | 400 | 690 |
| **6** | 0,8 | 0,12 | 2,1 | 10 | SiCl₄ | 2,00 | FeCl₃ | 10 | 400 | 25 | 30 | 270 | 820 |
| **7** | 2,3 | 0,30 | 6,9 | 20 | SiCl₄ | 4,44 | KCl | 3,0 | 191 | 12 | 24 | 320 | 500 |
| **8** | 2,3 | 0,30 | 12,3 | 20 | Si(OMe)₄ | 1,70 | AlCl₃ | 2,3 | 155 | 15 | 37 | 250 | 725 |
| **9** | 1,0 | 0,90 | 5,5 | 30 | AlCl₃ | 2,60 | Si(OEt)₄ | 3,5 | 250 | 35 | 47 | 150 | 450 |
| **10** | 2,2 | 0,70 | 14,8 | 17 | TiCl₄ AlCl₃ | 4,30 0,025 | CeCl₃ | 2,9 | 200 | 40 | 28 | 400 | 660 |

| | | | | | | | | | | | | | |
|---|---|---|---|---|---|---|---|---|---|---|---|---|---|
| §) alle als Lösung in Wasser, außer S(OEt)₄ in 80:20 Wasser/Ethanol | | | | | | | | | | | | | |

**Tabelle 5: Dotierte Metalloxidpartikel - II**

| | | **Metalloxid** | | **Dotierkomponente** | |
|---|---|---|---|---|---|
| **Beisp.** | **BET** | **Art** | **Anteil** | **Art** | **Anteil** |
| | m²/g | | Gew.-% | | Ges.-% |
| 5 | 135 | SiO₂ | 99,9 | Fe₂O₃ | 0,04 |
| 6 | 124 | SiO₂ | 97,4 | Fe₂O₃ | 2,58 |
| 7 | 299 | SiO₂ | 99, 8 | K₂O | 0,14 |
| 8 | 202 | SiO₂ | 99, 8 | Al₂O₃ | 0,18 |
| 9 | 151 | Al₂O₃ | 99,5 | SiO₂ | 0,4 |
| 10 | 75 | TiO₂ /Al₂O₃ | 99, 4/0, 5 | CeO₂ | 0,2 |

## Patentansprüche

1. Verfahren zur Herstellung von dotierten Metalloxidpartikeln, bei denen sich die Dotierkomponente in Form von Domänen auf der Oberfläche befindet, bei dem man
- in einer ersten Reaktionszone als Dotierstoff eine oxidierbare und/oder hydrolysierbare Metallverbindung zusammen mit einem Zerstäubungsgas in einen Strom von Metalloxidpartikeln in einem Transportgas zerstäubt,
- wobei der Massenstrom der Metalloxidpartikel und der Massenstrom des Dotierstoffes so gewählt sind, dass die dotierten Metalloxidpartikel 10 ppm bis 10 Gew.-% der Dotierkomponente enthalten, wobei die zuzuführende Menge an Dotierstoff als entsprechendes Oxid berechnet wird, und
- wobei die Temperatur in der ersten Reaktionszone so gewählt ist, dass sie unterhalb der Siedetemperatur des Dotierstoffes bei den herrschenden Reaktionsbedingungen ist und unterhalb oder Reaktionstemperatur der Umwandlung des Dotierstoffes in das entsprechende Oxid ist,
- in einer zweiten Reaktionszone man anschließend den Strom aus der ersten Reaktionszone und
- gegebenenfalls wenigstens soviel Sauerstoff und/oder Wasserdampf zusammenführt, dass die Menge an Sauerstoff und/oder Wasserdampf wenigstens ausreicht um den Dotierstoff vollständig umzusetzen,
- wobei die Temperatur von 300 bis 2000°C, bevorzugt 500 bis 1000°C, beträgt und
- man nachfolgend das Reaktionsgemisch abkühlt oder abkühlen lässt und die dotierten Metalloxidpartikel von den gasförmigen Stoffen abtrennt.

2. Verfahren nach Anspruch 1, **dadurch gekennzeichnet, dass** als Metalloxidpartikel die Oxide von Aluminium, Bor, Cer, Germanium, Niob, Silicium, Tantal, Titan, Vanadium, Wolfram, Zink, Zirkon und/oder deren Mischoxide eingesetzt werden.

3. Verfahren nach Anspruch 2, **dadurch gekennzeichnet, dass** die Metalloxidpartikel pyrogener Herkunft sind.

4. Verfahren nach den Ansprüchen 1 bis 3, **dadurch gekennzeichnet, dass** als Dotierstoff anorganische Metallsalze eingesetzt werden.

5. Verfahren nach den Ansprüchen 1 bis 4, **dadurch gekennzeichnet, dass** das Transportgas Sauerstoff, Wasserdampf, Inertgase, Kohlendioxid, Kohlenmonoxid, Chlor, Salpetersäure, Salzsäure, Edelgase oder ein Gemisch der vorgenannten Verbindungen ist.

6. Verfahren nach den Ansprüchen 1 bis 5, **dadurch gekennzeichnet, dass** die mittlere Verweilzeit in der ersten Reaktionszone 1 ms bis 1 min beträgt.

7. Verfahren nach den Ansprüchen 1 bis 6, **dadurch gekennzeichnet, dass** die mittlere Verweilzeit in der zweiten Reaktionszone 1 s bis 5 min beträgt.

8. Verfahren nach den Ansprüchen 1 bis 7, **dadurch gekennzeichnet, dass** man den Dotierstoff in einen Strom einbringt, wie er bei der Herstellung von pyrogen Oxiden mittels Flammenhydrolyse oder Flammenoxidation anfällt, welcher Metalloxidpulver und Wasserdampf enthält.

9. Dotierte Metalloxidpartikel, bei denen sich die Dotierkomponente ausschließlich auf der Oberfläche befindet und der Anteil an der Dotierkomponente von 10 ppm bis 10 Gew.-%, bezogen auf die dotierten Metalloxidpartikel, beträgt, erhältlich nach dem Verfahren gemäß der Ansprüche 1 bis 8.

10. Dotierte Metalloxidpartikel nach Anspruch 9, **dadurch gekennzeichnet, dass** sie eine BET-Oberfläche von 1 bis 500 m²/g aufweisen.

11. Verwendung der dotierten Metalloxidpartikel gemäß der Ansprüche 9 oder 10 als Katalysator, Katalysatorträger, als Füllstoff und zum Polieren.

## Claims

1. Process for the production of doped metal oxide particles, wherein the doping component is present on the surface in the form of domains, wherein
- in a first reaction zone, an oxidizable and/or hydrolysable metal compound as dopant together with an atomization gas is atomised into a flow of metal oxide particles in a carrier gas,
- wherein the mass flow of the metal oxide particles and the mass flow of the dopant are selected such that the doped metal oxide particles contain 10 ppm to 10 wt.% of the doping component, where the quantity of dopant to be introduced is calculated as the corresponding oxide, and
- wherein the temperature in the first reaction zone is selected such that it is below the boiling temperature of the dopant under the prevailing reaction conditions is below the reaction temperature of the conversion of the dopant into the corresponding oxide, and
- then, in a second reaction zone, the flow from the first reaction zone and
- optionally at least as much oxygen and/or steam are introduced that the quantity of oxygen and/or steam at least suffices completely to convert the dopant,
- wherein the temperature is from 300 to 2000°C, preferably 500 to 1000°C, and
- the reaction mixture is then cooled or allowed to cool and the doped metal oxide particles are separated from the gaseous substances.

2. Process according to Claim 1, **characterized in that** as metal oxide particles the oxides of aluminium, boron, cerium, germanium, niobium, silicon, tantalum, titanium, vanadium, tungsten, zinc, zirconium and/or mixed oxides thereof are used.

3. Process according to Claim 2, **characterized in that** the metal oxide particles are of pyrogenic origin.

4. Process according to Claims 1 to 3, **characterized in that** inorganic metal salts are used as dopant.

5. Process according to Claims 1 to 4, **characterized in that** the carrier gas is oxygen, steam, inert gases, carbon dioxide, carbon monoxide, chlorine, nitric acid, hydrochloric acid, noble gases or a mixture of the aforesaid compounds.

6. Process according to Claims 1 to 5, **characterized in that** the mean residence time in the first reaction zone is 1 msec to 1 min.

7. Process according to Claims 1 to 6, **characterized in that** the mean residence time in the second reaction zone is 1 sec to 5 mins.

8. Process according to Claims 1 to 7, **characterized in that** the dopant is introduced into a flow such as arises in the production of pyrogenic oxides by flame hydrolysis or flame oxidation, which contains metal oxide powder and steam.

9. Doped metal oxide particles, wherein the doping component is exclusively present on the surface and the content of the doping component is from 10 ppm to 10 wit.%, based on the doped metal oxide particles, obtainable by the process according to Claims 1 to 8.

10. Doped metal oxide particles according to Claim 9, **characterized in that** they have a BET surface area of 1 to 500 m²/g.

11. Use of the doped metal oxide particles according to Claims 9 or 10 as catalyst, catalyst support, as filler and for polishing.

## Revendications

1. Procédé pour la préparation de particules d'oxyde métallique dopées, dans lequel le composant de dopage se trouve sous forme de domaines sur la surface, dans lequel
- dans une première zone de réaction on pulvérise en tant que substance de dopage un composé métallique oxydable et/ou hydrolysable, conjointement avec un gaz de pulvérisation dans un courant de particules d'oxyde métallique dans un gaz de transport,
- le débit massique des particules d'oxyde métallique et le débit massique de la substance de dopage sont choisis de manière que les particules d'oxyde métallique dopées contiennent de 10 ppm à 10 % en poids du composant de dopage, la quantité de substance de dopage à introduire étant calculée en tant qu'oxyde correspondant, et
- la température dans la première zone de réaction étant choisie de manière à être inférieure à la température d'ébullition de la substance de dopage dans les conditions réactionnelles régnantes et inférieure à la température de réaction de la conversion de la substance de dopage en l'oxyde correspondant,
- dans une deuxième zone de réaction on réunit ensuite le courant provenant de la première zone de réaction et
- éventuellement suffisamment d'oxygène et/ou de vapeur d'eau pour que la quantité d'oxygène et/ou de vapeur d'eau au moins suffise pour faire complètement réagir la substance de dopage,
- la température étant de 300 à 2 000 °C, de préférence de 500 à 1 000 °C, et
- ensuite on refroidit ou laisse refroidir le mélange réactionnel et on sépare les particules d'oxyde métallique dopées d'avec les substances gazeuses.

2. Procédé selon la revendication 1, **caractérisé en ce qu'**on utilise comme particules d'oxyde métallique les oxydes d'aluminium, de bore, cérium, germanium, niobium, silicium, tantale, titane, vanadium, tungstène, zinc, zirconium et/ou leurs oxydes mixtes.

3. Procédé selon la revendication 2, **caractérisé en ce que** les particules d'oxyde métallique sont d'origine pyrogénée.

4. Procédé selon les revendications 1 à 3, **caractérisé en ce qu'**on utilise comme substance de dopage des sels métalliques inorganiques.

5. Procédé selon les revendications 1 à 4, **caractérisé en ce que** le gaz de transport est l'oxygène, la vapeur d'eau, des gaz inertes, le dioxyde de carbone, le monoxyde de carbone, le chlore, l'acide nitrique, l'acide chlorhydrique, des gaz rares ou un mélange des composés précités.

6. Procédé selon les revendications 1 à 5, **caractérisé en ce que** le temps de séjour moyen dans la première zone de réaction va de 1 ms à 1 min.

7. Procédé selon les revendications 1 à 6, **caractérisé en ce que** le temps de séjour moyen dans la deuxième zone de réaction va de 1 s à 5 min.

8. Procédé selon les revendications 1 à 6, **caractérisé en ce qu'**on introduit la substance de dopage dans un courant, tel qu'il est produit lors de la production d'oxydes pyrogénés par hydrolyse à la flamme ou oxydation à la flamme, qui contient de la poudre d'oxyde métallique et de la vapeur d'eau.

9. Particules d'oxyde métallique dopées, dans lesquelles le composant de dopage se trouve exclusivement sur la surface et la teneur en le composant de dopage va de 10 ppm à 10 % en poids, par rapport aux particules d'oxyde métallique dopées, pouvant être obtenues conformément au procédé selon les revendications 1 à 8.

10. Particules d'oxyde métallique dopées selon la revendication 9, **caractérisées en ce qu'**elles présentent une surface BET de 1 à 500 m²/g.

11. Utilisation des particules d'oxyde métallique dopées selon la revendication 9 ou 10, en tant que catalyseur, support de catalyseur, en tant que charge et pour le polissage.
